# EUROPEAN PATENT SPECIFICATION

(11) **EP 4 428 024 B1**
(45) Date of publication and mention of the grant of the patent: **02.04.2025**
(21) Application number: 24156292.5
(22) Date of filing: 07.02.2024
(51) Int. Cl.: B62K 5/08, B62K 5/10, B62K 5/027, B62K 5/05

(54) **LEANING VEHICLE**
NEIGEFAHRZEUG
VÉHICULE INCLINABLE

(30) Priority: 07.03.2023 JP 2023034650
(43) Date of publication of application: 11.09.2024
(73) Proprietor: Yamaha Hatsudoki Kabushiki Kaisha, Iwata-shi, Shizuoka 438-8501 (JP)
(72) Inventor: Nagata, Tatsuya, Iwata-shi, Shizuoka-ken, 438-8501 (JP); Uchiyama, Toshifumi, Iwata-shi, Shizuoka-ken, 438-8501 (JP); Sasaki, Ryo, Iwata-shi, Shizuoka-ken, 438-8501 (JP); Morita, Tomoro, Iwata-shi, Shizuoka-ken, 438-8501 (JP)
(74) Representative: Grünecker Patent- und Rechtsanwälte PartG mbB

(56) References cited:
- WO-A1-2011/161856
- JP-A- 2019 196 108

## Description

The present invention relates to a leaning vehicle having a left wheel and a right wheel, wherein the leaning vehicle tilts when turning left and right.

For example, as disclosed in JP 2018 - 149 962 A, a leaning vehicle has been known in the art that includes a vehicle body frame capable of tilting when turning left and right, a left wheel and a right wheel supporting the vehicle body frame, and a link mechanism that links together the vehicle body frame, the left wheel and the right wheel. The vehicle body frame, the left wheel and the right wheel are linked to the link mechanism so that they are rotatable around an axis extending in the vehicle front-rear direction.

WO 2011/161856 A1 discloses all of the features of the preamble of claim 1.

The leaning vehicle includes an actuator that applies a torque around an axis extending in the vehicle front-rear direction to the vehicle body frame. According to such a leaning vehicle, the actuator can be controlled to keep the vehicle body frame standing by itself. Hereinafter, keeping the vehicle body frame standing by itself by using the actuator will be referred to as standing assist. By providing standing assist when the vehicle is stopped, the vehicle body frame can be kept from leaning even if the rider does not put their feet on the ground.

With a conventional leaning vehicle, turning OFF the main switch immediately stops the power supply to the actuator. The torque generated by the actuator to keep the vehicle body frame standing by itself disappears upon turning OFF the main switch. Therefore, the rider needs to support the vehicle body frame by themselves immediately upon turning OFF the main switch.

One may consider continuing the control of the actuator even after the main switch is turned OFF in order to reduce the burden on the rider when the main switch is turned OFF. However, the rider may push the leaning vehicle to a parking location, for example, after the main switch is turned OFF. Then, the vehicle body frame may be tilted to turn the leaning vehicle. In this case, if the actuator continues to generate torque, it becomes difficult to turn the leaning vehicle while pushing it, and it is no longer possible to smoothly move the leaning vehicle.

The present invention has been made in view of the above, and an object thereof is to provide a leaning vehicle, with which standing assist can be provided, there is little burden on the rider after the main switch is turned OFF, and it is easy for the rider to move the leaning vehicle. According to the present invention said object is solved by a leaning vehicle having the features of the independent claim 1. Preferred embodiments are laid down in the dependent claims.

A leaning vehicle disclosed herein includes: a vehicle body frame including a head pipe; a left wheel arranged leftward relative to the head pipe; a right wheel arranged rightward relative to the head pipe; a left wheel support member that is configured to support the left wheel; a right wheel support member that is arranged rightward of the left wheel support member and is configured to support the right wheel; a link member extending leftward and rightward of the vehicle body frame; a central link shaft extending in a vehicle front-rear direction that rotatably links the vehicle body frame to the link member; a left link shaft extending in the vehicle front-rear direction that rotatably links the left wheel support member to the link member; a right link shaft extending in the vehicle front-rear direction that rotatably links the right wheel support member to the link member; an actuator that is configured to apply a torque around the central link shaft to the vehicle body frame; a control device that is configured to control the actuator; and a main switch that is operated by a rider. The control device includes: a standing assist control section that is configured to execute standing assist for keeping the vehicle body frame standing by itself by controlling the actuator; and a standing assist continuation section that is configured to continue the control of the actuator until a predetermined amount of time elapses when the main switch is turned OFF during execution of the standing assist, and that is configured to terminate the control of the actuator when the predetermined amount of time elapses.

With the leaning vehicle described above, when the rider turns OFF the main switch during execution of the standing assist, the torque of the actuator does not disappear immediately but remains until the predetermined amount of time elapses. Therefore, the rider does not need to support the vehicle body frame from the moment the main switch is turned OFF. Thus, it is possible to reduce the burden on the rider. With the leaning vehicle described above, since the torque of the actuator disappears when the predetermined amount of time elapses after the main switch is turned OFF, the rider can turn the leaning vehicle while pushing the leaning vehicle. Thus, the rider can easily move the leaning vehicle to a parking location, etc., after the predetermined amount of time elapses.

The standing assist continuation section may be configured to gradually decrease the torque output by the actuator until the predetermined amount of time elapses when the main switch is turned OFF during execution of the standing assist.

Thus, it is possible to prevent the output torque of the actuator from disappearing rapidly before the predetermined amount of time elapses from when the rider turns OFF the main switch. This can prevent the load of the vehicle body frame from being suddenly placed against the rider after the main switch is turned OFF, thus reducing the burden on the rider.

The leaning vehicle may include a notification device that is configured to give a notification to the rider until the predetermined amount of time elapses when the main switch is turned OFF during execution of the standing assist.

Thus, the rider can easily know that the torque of the actuator remains after the main switch is turned OFF. The rider can prepare for the disappearance of the torque of the actuator.

While there is no particular limitation on the predetermined amount of time, it may be 0.3 to 1 second, for example.

The leaning vehicle may include: a steering shaft supported by the head pipe; and a steering handle fixed to the steering shaft. The left wheel and the right wheel may be a left front wheel and a right front wheel, respectively, arranged forward of the steering handle.

The leaning vehicle may include: a seat supported by the vehicle body frame; and a footrest supported by the vehicle body frame, arranged downward of the seat, and supporting feet of the rider seated on the seat.

With the present invention, it is possible to provide a leaning vehicle, with which standing assist can be provided, there is little burden on the rider after the main switch is turned OFF, and it is easy for the rider to move the leaning vehicle.

### BRIEF DESCRIPTION OF THE DRAWINGS

FIG. **1** is a left side view of a leaning vehicle according to one embodiment.
FIG. **2** is a left side view of a part of the leaning vehicle.
FIG. **3** is a left side view of a part of the leaning vehicle.
FIG. **4** is a front view of a part of the leaning vehicle.
FIG. **5** is a plan view of a part of the leaning vehicle.
FIG. **6** is a front view of a part of the leaning vehicle with the vehicle body frame tilted leftward.
FIG. **7** is an electric circuit diagram of a part of the leaning vehicle.
FIG. **8** is a block diagram of a control system of the leaning vehicle.
FIG. **9** is a graph showing the relationship between the time elapsed after the main switch is turned OFF and the output torque of the lean actuator.

### DETAILED DESCRIPTION OF THE PREFERRED EMBODIMENTS

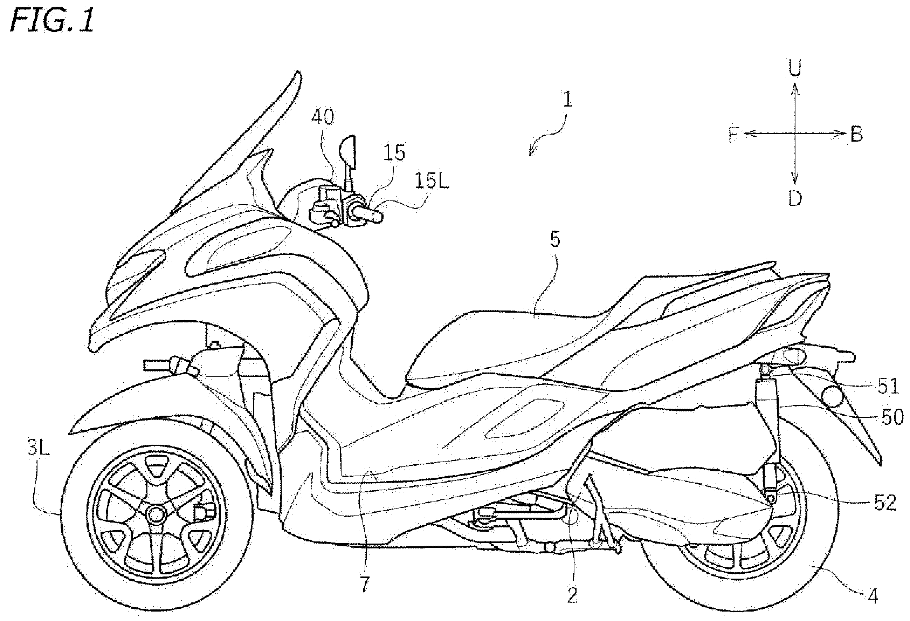

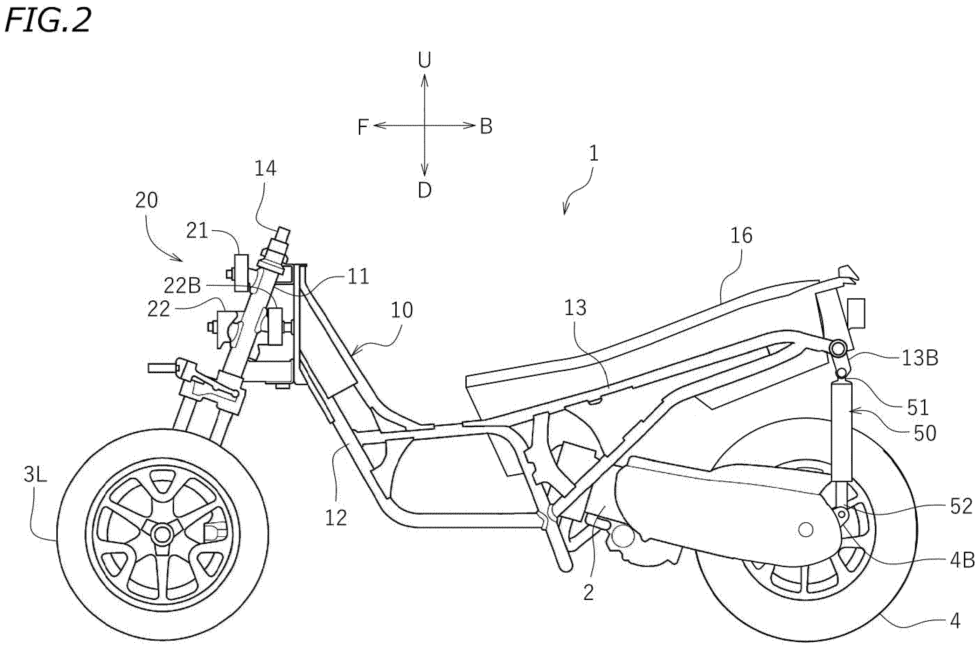

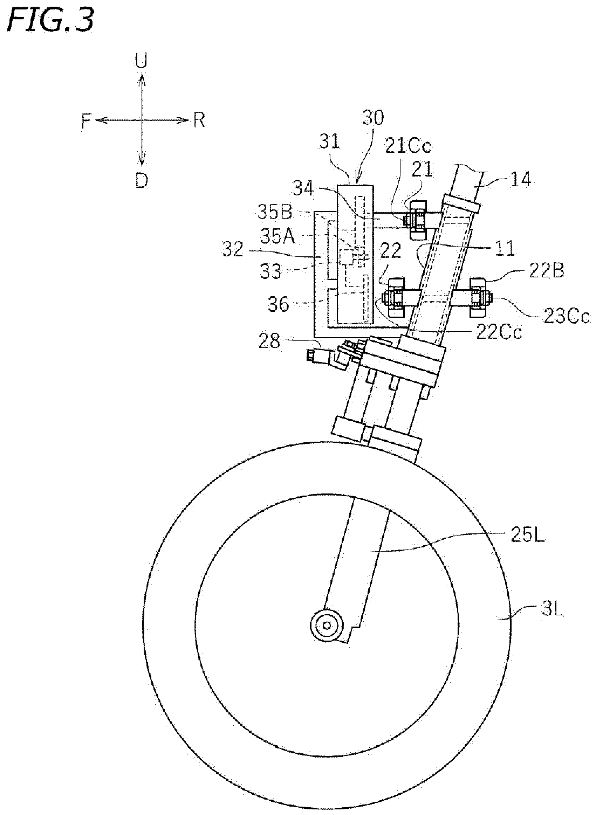

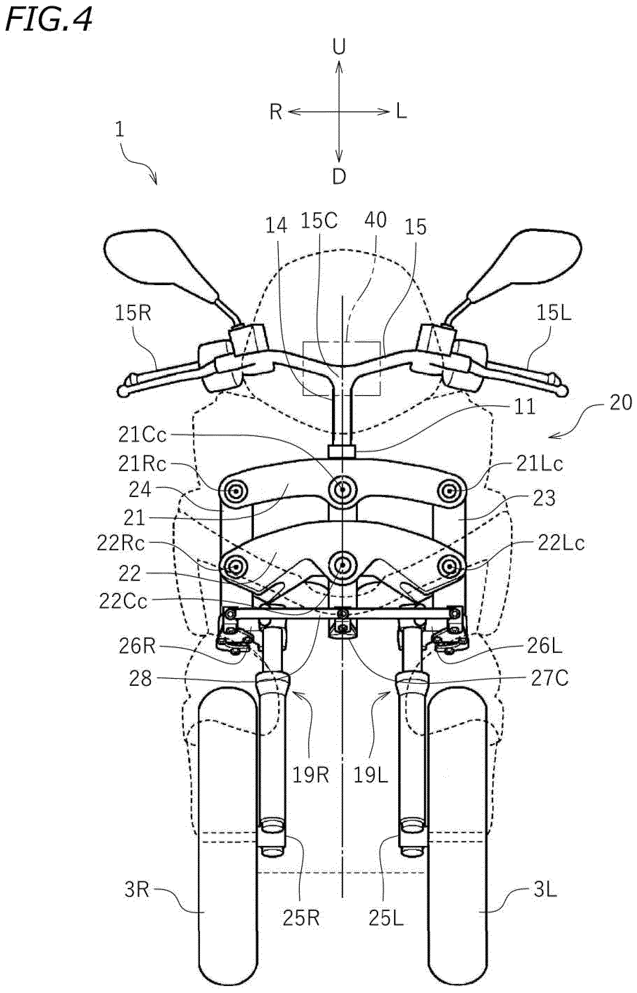

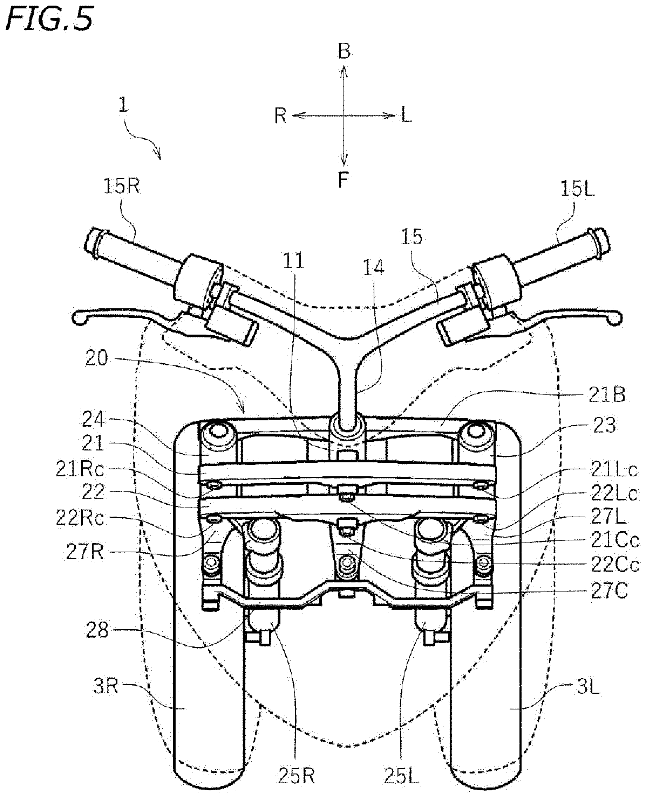

One embodiment of a leaning vehicle will now be described with reference to the drawings. FIG. **1** is a left side view of a leaning vehicle **1** according to the present embodiment. FIG. **2** is a left side view of a part of the leaning vehicle **1.** FIG. **3** is a left side view of a part of the leaning vehicle **1.** FIG. **4** is a front view of a part of the leaning vehicle **1.** FIG. **5** is a plan view of a part of the leaning vehicle **1.**

The terms front, rear, left, right, up and down, as used in the description below, refer to these directions as seen from a virtual rider seated on a seat **5** while the leaning vehicle **1** is standing upright (standing upright as used herein refers to a state where a vehicle body frame **10** to be described below is standing upright) on a horizontal surface with no rider and no load thereon, unless specified otherwise. The designations F, B, L, R, U and D, as used in the figures, refer to front, rear, left, right, up and down, respectively. The vehicle up-down direction coincides with the vertical direction. The vehicle front-rear direction is orthogonal to the vehicle up-down direction. The vehicle left-right direction is orthogonal to the vehicle front-rear direction and the vehicle up-down direction.

As shown in FIG. **1** and FIG. **2****,** the leaning vehicle **1** includes the vehicle body frame **10,** a link mechanism **20,** a left front wheel **3L,** a right front wheel **3R** (see FIG. **4**), a rear wheel **4,** a power unit **2,** the seat **5** and a storage box **16.** The leaning vehicle 1 is a three-wheel vehicle with two front wheels **3L, 3R** and one rear wheel **4.**

As shown in FIG. **2****,** the vehicle body frame **10** includes a head pipe **11,** a down frame **12** extending rearward and downward from the head pipe **11,** and a seat frame **13** extending rearward from the down frame **12.** The seat **5** is supported by the vehicle body frame **10.** Herein, the seat **5** is supported by the seat frame **13.** The storage box **16** is arranged downward of the seat **5,** and supported by the seat frame **13.** As shown in FIG. **4****,** a steering shaft **14** is rotatably supported by the head pipe **11.** A steering handle **15** is fixed to the steering shaft **14.**

As shown in FIG. **1****,** the leaning vehicle **1** according to the present embodiment is a scooter. The leaning vehicle **1** includes a low footrest **7.** The footrest **7** is supported by the vehicle body frame **10.** Herein, the footrest **7** is supported by the down frame **12** (see FIG. **2**). The footrest 7 is arranged downward of the seat **5.** The footrest **7** is a platform for supporting the feet of the rider seated on the seat **5.**

As shown in FIG. **4****,** the link mechanism **20** is a parallelogram link-type link mechanism. The link mechanism **20** is arranged upward relative to the left front wheel **3L** and the right front wheel **3R.** The link mechanism **20** includes an upper arm **21,** a lower arm **22,** a left arm **23** and a right arm **24.**

The upper arm **21** and the lower arm **22** extend leftward and rightward. The upper arm **21** and the lower arm **22** are examples of link members extending leftward and rightward of the vehicle body frame **10.** The lower arm **22** is arranged downward of the upper arm **21.** The upper arm **21** and the lower arm **22** are arranged forward of the head pipe **11** (see FIG. **2**). The upper arm **21** is rotatably linked to the head pipe **11** by a first central link shaft **21Cc** extending in the vehicle front-rear direction. The lower arm **22** is rotatably linked to the head pipe **11** by a second central link shaft **22Cc** extending in the vehicle front-rear direction.

In the present embodiment, as shown in FIG. **2****,** another lower arm **22B** is arranged rearward of the head pipe **11.** The lower arm **22B** extends leftward and rightward. The lower arm **22B** is arranged downward of the upper arm **21.** The lower arm **22B** is rotatably linked to the head pipe **11** by a third central link shaft **23Cc** (see FIG. **3**) extending in the vehicle front-rear direction. Note that another upper arm (not shown) may be arranged rearward of the head pipe **11,** and this upper arm may be rotatably linked to the head pipe **11** by another central link shaft (not shown) extending in the vehicle front-rear direction. Note however that the other upper arm and the other lower arm **22B** arranged rearward of the head pipe **11** are optional.

As shown in FIG. **4****,** the left arm **23** and the right arm **24** extend upward and downward. The left arm **23** is arranged leftward of the head pipe **11** and the right arm **24** is arranged rightward of the head pipe **11.** The right arm **24** is arranged rightward of the left arm **23.** The left arm **23** and the right arm **24** are arranged rearward of the upper arm **21** and the lower arm **22.** The left arm **23** and the right arm **24** are arranged forward of the lower arm **22B.** The left arm **23** and the right arm **24** are rotatably linked to the upper arm **21,** the lower arm **22** and the lower arm **22B.**

Specifically, the upper end portion of the left arm **23** is rotatably linked to the left end portion of the upper arm **21** by a first left link shaft **21Lc** extending in the vehicle front-rear direction. The lower end portion of the left arm **23** is rotatably linked to the left end portion of the lower arm **22** by a second left link shaft **22Lc** extending in the vehicle front-rear direction. The lower end of the left arm **23** is rotatably linked to the left end portion of the lower arm **22B** by a third left link shaft (not shown) extending in the vehicle front-rear direction. The upper end portion of the right arm **24** is rotatably linked to the right end portion of the upper arm **21** by the first right link shaft **21Rc** extending in the vehicle front-rear direction. The lower end portion of the right arm **24** is rotatably linked to the right end portion of the lower arm **22** by the second right link shaft **22Rc** extending in the vehicle front-rear direction. The lower end portion of the right arm **24** is rotatably linked to the right end portion of the lower arm **22B** by a third right link shaft (not shown) extending in the vehicle front-rear direction.

The leaning vehicle **1** includes, as front suspensions, a left suspension **25L** and a right suspension **25R.** In the present embodiment, the left suspension **25L** and the right suspension **25R** are telescopic suspensions. The upper end portion of the left suspension **25L** and the upper end portion of the right suspension **25R** are connected to the link mechanism **20.** The lower end portion of the left suspension **25L** is connected to the left front wheel **3L,** and the lower portion of the right suspension **25R** is connected to the right front wheel **3R.** Specifically, the upper end portion of the left suspension **25L** is connected to the lower end portion of the left arm **23** via a left bracket **26L.** The upper end portion of the left suspension **25L** is connected to the left arm **23** so as to be rotatable in the left-right direction of the vehicle body frame **10.** The upper end portion of the right suspension **25R** is connected to the lower end portion of the right arm **24** via a right bracket **26R.** The upper end portion of the right suspension **25R** is connected to the right arm **24** so as to be rotatable in the left-right direction of the vehicle body frame **10.**

The left suspension **25L,** the left bracket **26L** and the left arm **23** together form a left wheel support member **19L** that supports the left front wheel **3L.** The right suspension **25R,** the right bracket **26R** and the right arm **24** together form a right wheel support member **19R** that supports the right front wheel **3R.**

A center plate **27C** is fixed to the lower end portion of the steering shaft **14.** As shown in FIG. **5****,** the center plate **27C** extends forward from the steering shaft **14.** A left plate **27L** is fixed to the left bracket **26L.** A right plate **27R** is fixed to the right bracket **26R.** The left plate **27L,** the center plate **27C** and the right plate **27R** are linked to a tie rod **28** so as to be rotatable left and right. The steering shaft **14** is linked to the left arm **23** and the right arm **24** via the center plate **27C,** the tie rod **28,** the left plate **27L** and the right plate **27R.**

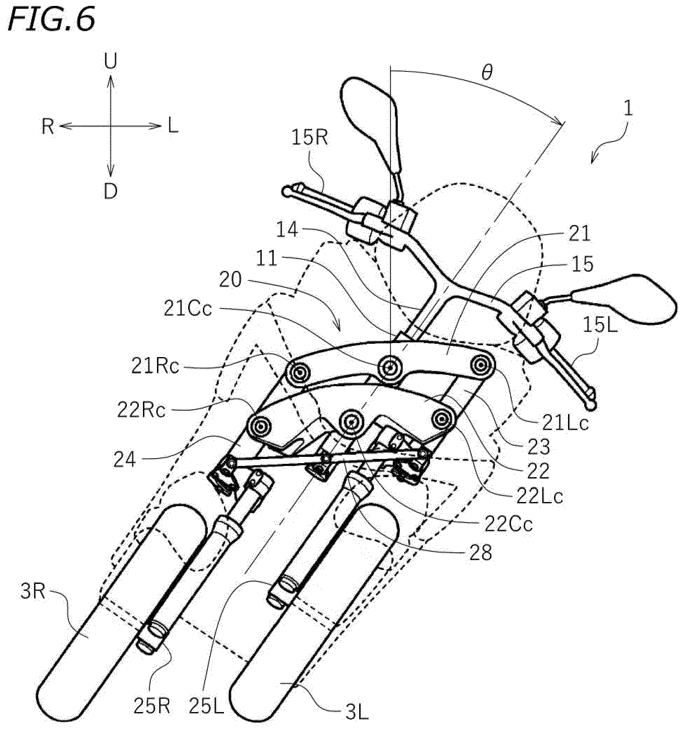

As shown in FIG. **3****,** the leaning vehicle **1** includes a roll angle control device **30** that controls the roll angle. Note that in the figures other than FIG. **3****,** the roll angle control device **30** is not shown. The roll angle as used herein is the tilt angle **θ** (see FIG. **6**) of the vehicle body frame **10** from the vertical line. Note that in the present embodiment, the roll angle **θ** is equal to the angle between the axis of the head pipe **11** and the vertical line as viewed in the vehicle front view. The roll angle control device **30** controls the roll angle of the vehicle body frame **10** by adjusting the rotation of the upper arm **21** and the lower arm **22** relative to the vehicle body frame **10.** The roll angle control device **30** is configured to apply a torque to at least one of the upper arm **21** and the lower arm **22.** The roll angle control device **30** is connected to at least one of the upper arm **21** and lower arm **22,** and to the vehicle body frame **10.** In the present embodiment, the roll angle control device 30 is connected to the upper arm **21** and the head pipe **11.** Note however that there is no particular limitation thereto, and the roll angle control device **30** may be connected to the lower arm **22** and the head pipe **11.**

The roll angle control device **30** includes a case **31,** a lean actuator **33,** a gear **35A** and a gear **35B** arranged inside the case **31,** and an actuator control device **36** arranged inside the case **31.** The case **31** is supported by a support member **32** fixed to the head pipe **11.**

The lean actuator **33** is a power source that applies a torque around the first central link shaft **21Cc** to the vehicle body frame **10.** The lean actuator **33** may apply a torque directly or indirectly to the vehicle body frame **10.** In the present embodiment, the lean actuator **33** applies a leftward or rightward torque to the upper arm **21,** thereby indirectly applying a rightward or leftward torque to the vehicle body frame **10.** In the present embodiment, the lean actuator **33** is an electric motor. Note however that the lean actuator **33** is not limited to an electric motor as long as the lean actuator **33** can generate power.

The lean actuator **33** is connected to the gear **35A,** and the gear **35A** is meshed with the gear **35B.** The gear **35A** and the gear **35B** together form a decelerator. The gear **35B** is fixed to an output shaft **34.** The output shaft **34** is a rotating shaft driven by the lean actuator **33** and is connected to the upper arm **21.** The torque of the lean actuator **33** is transmitted to the upper arm **21** via the gear **35A,** the gear **35B** and the output shaft **34.** When the lean actuator **33** is driven, a torque around the first central link shaft **21Cc** (see FIG. **4**) is applied to the upper arm **21.** Since the upper arm **21** is linked to the vehicle body frame **10** so as to be rotatable around the first central link shaft **21Cc**, when a torque around the first central link shaft **21Cc** is applied to the upper arm **21,** a torque around the first central link shaft **21Cc** is generated in the vehicle body frame **10.**

The leaning vehicle **1** includes an IMU (not shown). The actuator control device **36** is communicatively connected to the IMU via a wire harness (not shown). The actuator control device **36** is configured to receive a signal from the IMU and control the lean actuator **33.**

As shown in FIG. **2****,** a power unit **2** is pivotally supported on the vehicle body frame **10.** The power unit **2** is connected to the rear wheel **4** so that power can be transmitted therebetween. The power unit **2** generates driving force for traveling. The power unit **2** provides power to the rear wheel **4.** The power unit **2** may include an internal combustion engine or may include an electric motor. In the present embodiment, the power unit **2** includes an internal combustion engine (hereinafter referred to as an "engine").

The leaning vehicle **1** includes left and right rear suspensions **50.** The left rear suspension **50** is arranged leftward of the rear wheel **4** and the right rear suspension **50** is arranged rightward of the rear wheel **4.** Each rear suspension **50** includes an upper support portion **51** pivotably supported on the vehicle body frame **10** and a lower support portion **52** pivotably supported on the rear wheel **4.** Herein, the upper support portion **51** is pivotably supported on the seat frame **13** via a bracket **13B.** The lower support portion **52** is pivotably supported on a bracket **4B** mounted on the axle of the rear wheel **4.**

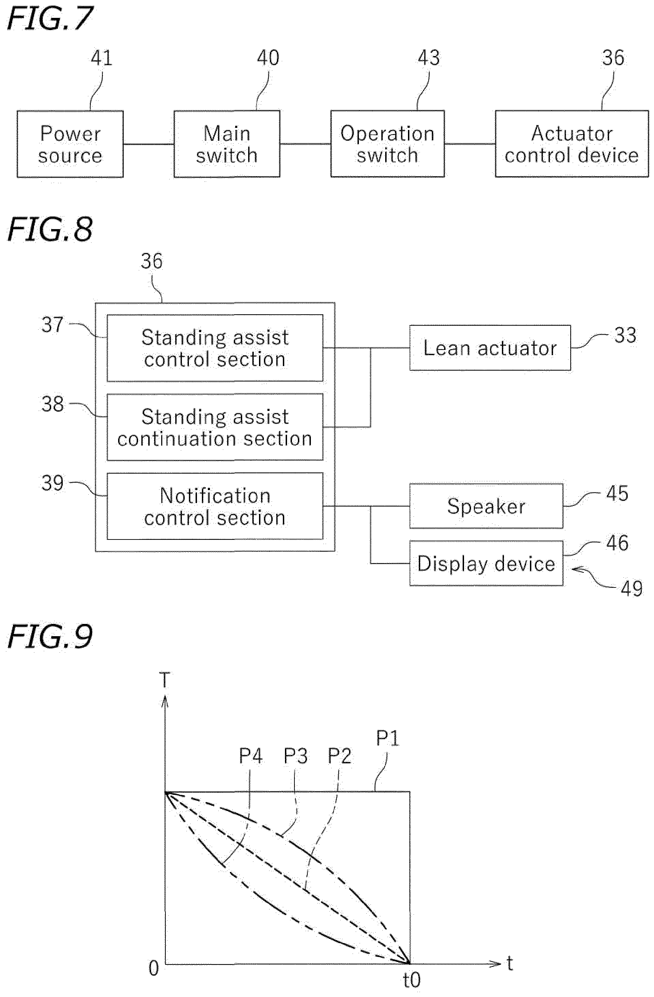

As shown in FIG. **7****,** the leaning vehicle **1** includes a power source **41** that supplies power, a main switch **40** that is operated by the rider, an operation switch **43,** and electrical components including an actuator control device **36.** Although not shown in the figures, the leaning vehicle **1** includes a battery and a generator that generates electricity from the power of a power unit **2.** The power source **41** is composed of the battery and the generator. The main switch **40** is a switch that switches ON/OFF the power supply from the power source **41** to electrical components. There is no particular limitation on the locations of the main switch **40** and the operation switch **43.** The main switch **40** or the operation switch **43** may be mounted on the steering handle **15,** for example. The main switch **40** or the operation switch **43** may be arranged rightward of a left grip **15L** or arranged leftward of a right grip **15R.**

With the leaning vehicle **1,** the actuator control device **36** controls the lean actuator **33** to automatically keep the vehicle body frame **10** standing upright. The control by which the actuator control device **36** controls the lean actuator **33** keep the vehicle body frame **10** standing by itself will hereinafter be referred to as standing assist.

For example, when the rider seated on the seat **5** applies their weight to the left, the vehicle body frame **10** is subjected to a leftward force. As it is, the vehicle body frame **10** will lean leftward. The actuator control device **36** detects the tilt of the vehicle body frame **10** based on the signal from the IMU. When the actuator control device **36** detects the tilt of the vehicle body frame **10,** the actuator control device **36** controls the lean actuator **33** to eliminate the tilt. Specifically, the actuator control device **36** controls the lean actuator **33** so that the roll angle of the vehicle body frame **10** becomes zero. When the vehicle body frame **10** leans leftward, the actuator control device **36** controls the lean actuator **33** so as to apply a rightward torque to the vehicle body frame **10.** When the vehicle body frame **10** leans rightward, the actuator control device **36** controls the lean actuator **33** so as to apply a leftward torque to the vehicle body frame **10.**

The operation switch **43** is a switch that turns ON/OFF the standing assist. During execution of the standing assist, the vehicle body frame **10** is kept standing by itself even if the rider does not put their feet on the ground. During execution of the standing assist, the vehicle body frame **10** is kept standing by itself even if the rider places both feet on a footrest **7.** If the operation switch **43** is turned ON while the main switch **40** is ON, the standing assist is started, and if the operation switch **43** is turned OFF while the main switch **40** is ON, the standing assist is terminated.

The actuator control device **36** is a computer. As shown in FIG. **8****,** the actuator control device **36** executes a computer program and as a result functions as a standing assist control section **37,** a standing assist continuation section **38** and a notification control section **39.**

The standing assist control section **37** controls the lean actuator **33** so that the vehicle body frame **10** stands by itself when the operation switch **43** is ON.

When the main switch **40** is turned OFF during execution of the standing assist, the standing assist continuation section **38** continues to control the lean actuator **33** until a predetermined amount of time (hereinafter referred to as the continuation time) elapses, and when the continuation time elapses, the control of the lean actuator **33** is terminated. In other words, when the main switch **40** is turned OFF during execution of the standing assist, the standing assist continuation section **38** continues the standing assist until the continuation time elapses and terminates the standing assist when the continuation time elapses. While there is no particular limitation on the continuation time, it may be 0.3 to 1 second, for example.

There is no particular limitation on the method of controlling the lean actuator **33** by the standing assist continuation section **38.** For example, the standing assist continuation section **38** may keep the output torque T of the lean actuator **33** constant until the continuation time t0 elapses after the main switch **40** is turned OFF, as indicated by a solid line **P1** in FIG. **9****.** Note that the symbol t in FIG. **9** represents the elapsed time from when the main switch **40** is turned OFF, and the symbol T represents the output torque of the lean actuator **33.** The standing assist continuation section **38** may gradually decrease the output torque T of the lean actuator **33** until the continuation time t0 elapses from when the main switch **40** is turned OFF, as indicated by a broken line **P2,** a single-dot chain line **P3** or a double-dot chain line **P4.**

As shown in FIG. **8****,** the leaning vehicle **1** includes a speaker **45** and a display device **46.** When the main switch **40** is turned OFF during execution of the standing assist, the notification control section **39** gives a notification to the rider until the continuation time elapses. Here, when the main switch **40** is turned OFF during execution of the standing assist, the notification control section **39** outputs a sound from the speaker **45** and/or displays a predetermined image on the display device **46** until the continuation time elapses. Thus, the rider can easily know that the standing assist is continuing after the main switch **40** is turned OFF. Note that the notification control section **39,** the speaker **45** and the display device **46** together form a notification device **49.**

The leaning vehicle **1** is configured as described above. With the leaning vehicle **1** according to the present embodiment, the following effects can be obtained.

The leaning vehicle **1** is capable of providing standing assist, and the leaning vehicle **1** can stand by itself even if the rider does not support the leaning vehicle **1** with their feet on the ground. Here, when the main switch **40** is turned OFF while the rider places their feet on the footrest **7,** if the power supply to the actuator control device **36** and the lean actuator **33** is immediately stopped, the torque of the lean actuator **33** disappears suddenly and the vehicle body frame **10** tilts suddenly. In such a case, the rider must quickly put their feet on the ground to support the vehicle body frame **10.** This places a burden on the rider.

In order to reduce the burden on the rider when the main switch **40** is turned OFF, one may consider continuing the standing assist until the operation switch **43** is turned OFF even after the main switch **40** is turned OFF. However, the rider may wish to push the leaning vehicle **1** toward a parking location, etc., immediately after turning OFF the main switch **40.** In such a case, if the rider forgets to turn OFF the operation switch **43,** the standing assist continues and the rider is not be able to turn the vehicle body frame **10.** Without turning OFF the operation switch **43,** the leaning vehicle **1** cannot be easily moved. Therefore, the operation to turn OFF the operation switch **43** is necessary. However, turning OFF the operation switch **43** after turning OFF the main switch **40** is a complicated operation, which increases the operational burden on the rider.

In contrast, with the leaning vehicle **1** according to the present embodiment, when the rider turns OFF the main switch **40** during execution of the standing assist, the torque of the lean actuator **33** does not disappear immediately, but remains until a predetermined continuation time elapses. Therefore, the rider does not need to support the vehicle body frame **10** from the moment the rider turns OFF the main switch **40.** Between the time when the main switch **40** is turned OFF and the time when the torque of the lean actuator **33** disappears, there is a time margin for preparing to support the vehicle body frame **10.** Therefore, with the leaning vehicle 1 according to the present embodiment, the burden on the rider after the main switch **40** is turned OFF can be reduced. With the leaning vehicle **1** according to the present embodiment, the torque of the lean actuator **33** disappears after the continuation time elapses after the main switch **40** is turned OFF. Thereafter, the rider can turn the leaning vehicle **1** while pushing the leaning vehicle **1.** Thus, the rider can easily move the leaning vehicle **1** to a parking location, etc., without having to perform a complicated operation.

As described above, the standing assist continuation section **38** of the actuator control device **36** may gradually decrease the torque of the lean actuator **33** until the continuation time elapses when the main switch **40** is turned OFF during execution of the standing assist (see lines **P2, P3** and **P4** in FIG. **9**). Thus, it is possible to prevent the torque of the lean actuator 33 from disappearing rapidly before the continuation time elapses from when the rider turns OFF the main switch **40.** This can prevent the load of the vehicle body frame **10** from being suddenly placed against the rider after the main switch **40** is turned OFF, thus reducing the burden on the rider.

According to the present embodiment, the notification device **49** is provided for giving a notification to the rider until the continuation time elapses when the main switch **40** is turned OFF during execution of the standing assist. In the present embodiment, the notification device **49** notifies the rider by means of a sound from the speaker **45** or an image by the display device **46.** Thus, after the main switch is turned OFF, the rider can easily know that the torque of the lean actuator **33** remains and that the torque of the lean actuator **33** will eventually disappear. Thus, the rider can prepare for the disappearance of the torque of the lean actuator **33.**

While an embodiment of the leaning vehicle has been described above, the embodiment is merely an example. Various other embodiments are possible.

The leaning vehicle **1** in the embodiment described above is a scooter. However, the vehicle form of the leaning vehicle is not limited to a scooter.

One of the speaker **45** and the display device **46** of the notification device **49** may be absent. The notification device **49** may include an additional device for giving a notification to the rider, other than the speaker **45** for giving a notification by means of a sound and the display device **46** for giving a notification by means of an image. The notification device **49** may be optional.

### Reference Signs List

- 1: Leaning vehicle,

- 2: Power unit,
- 3L: Left front wheel (left wheel),
- 3R: Right front wheel (right wheel),
- 4: Rear wheel,
- 5: Seat,
- 7: Footrest,
- 10: Vehicle body frame,
- 11: Head pipe,
- 12: Down frame,
- 14: Steering shaft,
- 15: Steering handle,
- 16: Storage box,
- 19L: Left wheel support member,
- 19R: Right wheel support member,
- 20: Link mechanism,
- 21: Upper arm (link member),
- 21Cc: First central link shaft (central link shaft),
- 21Lc: First left link shaft (left link shaft),
- 21Rc: First right link shaft (right link shaft),
- 22: Lower arm (link member),
- 23: Left arm,
- 24: Right arm,
- 25L: Left suspension,
- 25R: Right suspension,
- 26L: Left bracket,
- 26R: Right bracket,
- 27C: Center plate,
- 27L: Left plate,
- 27R: Right plate,
- 28: Tie rod,
- 30: Roll angle control device,
- 31: Case,
- 32: Support member,
- 33: Lean actuator (actuator),
- 34: Output shaft,
- 35A: First gear,
- 35B: Second gear,
- 36: Actuator control device (control device),
- 37: Standing assist control section,
- 38: Standing assist continuation section,
- 39: Notification control section,
- 40: Main switch,
- 41: Power soruce,
- 43: Operation switch,
- 45: Speaker,
- 46: Display device,
- 49: Notification device,
- 50: Left and right rear suspensions,
- 51: Upper support portion,
- 52: Lower support portion.

## Claims

1. A leaning vehicle **(1)** comprising:
a vehicle body frame **(10)** including a head pipe **(11);**
a left wheel **(3L)** arranged leftward relative to the head pipe **(11);**
a right wheel **(3R)** arranged rightward relative to the head pipe **(11);**
a left wheel support member **(19L)** that is configured to support the left wheel **(3L);**
a right wheel support member **(19R)** that is arranged rightward of the left wheel support member **(19L)** and is configured to support the right wheel **(3R);**
a link member **(21)** extending leftward and rightward of the vehicle body frame **(10);**
a central link shaft **(21Cc)** extending in a vehicle front-rear direction that rotatably links the vehicle body frame **(10)** to the link member **(21);**
a left link shaft **(21Lc)** extending in the vehicle front-rear direction that rotatably links the left wheel support member **(19L)** to the link member **(21);**
a right link shaft **(21Rc)** extending in the vehicle front-rear direction that rotatably links the right wheel support member **(19R)** to the link member **(21);**
an actuator **(33)** that is configured to apply a torque around the central link shaft **(21Cc)** to the vehicle body frame **(10);**
a control device **(36)** that is configured to control the actuator **(33);** and
a main switch **(40)** that is operated by a rider,
wherein the control device **(36)** includes:
a standing assist control section **(37)** that is configured to execute standing assist for keeping the vehicle body frame **(10)** standing by itself by controlling the actuator **(33)**; **characterized in that** the leaning vehicle comprises
a standing assist continuation section **(38)** that is configured to continue the control of the actuator **(33)** until a predetermined amount of time elapses when the main switch **(40)** is turned OFF during execution of the standing assist, and that is configured to terminate the control of the actuator **(33)** when the predetermined amount of time elapses.

2. A leaning vehicle **(1)** according to claim 1, wherein the standing assist continuation section **(38)** is configured to gradually decrease the torque output by the actuator **(33)** until the predetermined amount of time elapses when the main switch **(40)** is turned OFF during execution of the standing assist.

3. A leaning vehicle **(1)** according to claim 1 or 2, comprising a notification device **(49)** that is configured to give a notification to the rider until the predetermined amount of time elapses when the main switch **(40)** is turned OFF during execution of the standing assist.

4. A leaning vehicle **(1)** according to any one of claims 1 to 3, wherein the predetermined amount of time is 0.3 to 1 second.

5. A leaning vehicle **(1)** according to any one of claims 1 to 4, comprising:
a steering shaft **(14)** supported by the head pipe **(11);** and
a steering handle **(15)** fixed to the steering shaft **(14),**
wherein the left wheel **(3L)** and the right wheel **(3R)** are a left front wheel and a right front wheel, respectively, arranged forward of the steering handle **(15).**

6. A leaning vehicle **(1)** according to any one of claims 1 to 5, comprising:
a seat **(5)** supported by the vehicle body frame **(10);** and
a footrest **(7)** supported by the vehicle body frame **(10),** arranged downward of the seat **(5),** and supporting feet of the rider seated on the seat **(5).**

## Patentansprüche

1. Ein Neigefahrzeug (1), aufweisend:
einen Fahrzeugkarosserierahmen (10) mit einem Steuerrohr (11);
ein linkes Rad (3L), das relativ zum Steuerrohr (11) nach links angeordnet ist;
ein rechtes Rad (3R), das relativ zum Steuerrohr (11) nach rechts angeordnet ist;
ein linkes Radstützelement (19L), das so konfiguriert ist, dass es das linke Rad (3L) stützt;
ein rechtes Radstützelement (19R), das rechts vom linken Radstützelement (19L) angeordnet ist und so konfiguriert ist, dass es das rechte Rad (3R) stützt;
ein Verbindungselement (21), das sich links und rechts vom Fahrzeugkarosserierahmen (10) erstreckt;
eine zentrale Verbindungswelle (21Cc), die sich in einer Richtung von vorne nach hinten des Fahrzeugs erstreckt und den Fahrzeugkarosserierahmen (10) drehbar mit dem Verbindungselement (21) verbindet;
eine linke Verbindungswelle (21Lc), die sich in einer Richtung von vorne nach hinten des Fahrzeugs erstreckt und das linke Radstützelement (19L) drehbar mit dem Verbindungselement (21) verbindet;
eine rechte Verbindungswelle (21Rc), die sich in der Richtung von vorne nach hinten des Fahrzeugs erstreckt und das rechte Radstützelement (19R) drehbar mit dem Verbindungselement (21) verbindet;
einen Aktuator (33), der so konfiguriert ist, dass er ein Drehmoment um die zentrale Verbindungswelle (21Cc) auf den Fahrzeugkarosserierahmen (10) ausübt;
eine Steuervorrichtung (36), die so konfiguriert ist, dass sie den Aktuator (33) steuert; und
einen Hauptschalter (40), der von einem Fahrer betätigt wird,
wobei die Steuervorrichtung (36) aufweist:
einen Stehhilfesteuerabschnitt (37), der so konfiguriert ist, dass er eine Stehhilfe ausführt, um den Fahrzeugkarosserierahmen (10) durch Steuern des Aktuators (33) von selbst aufrecht zu halten;
**dadurch gekennzeichnet, dass** das Neigefahrzeug
einen Stehhilfefortsetzungsabschnitt (38) aufweist, der so konfiguriert ist, dass er die Steuerung des Aktuators (33) fortsetzt, bis eine vorbestimmte Zeitspanne verstrichen ist, wenn der Hauptschalter (40) während der Ausführung der Stehhilfe ausgeschaltet wird, und der so konfiguriert ist,
dass er die Steuerung des Aktuators (33) beendet, wenn die vorbestimmte Zeitspanne verstrichen ist.

2. Ein Neigefahrzeug (1) gemäß Anspruch 1, wobei der Stehhilfefortsetzungsabschnitt (38) so konfiguriert ist, dass er das vom Aktuator (33) abgegebene Drehmoment allmählich verringert, bis die vorgegebene Zeitspanne verstrichen ist, wenn der Hauptschalter (40) während der Ausführung der Stehhilfe ausgeschaltet wird.

3. Ein Neigefahrzeug (1) nach Anspruch 1 oder 2, aufweisend eine Benachrichtigungsvorrichtung (49), die so konfiguriert ist, dass sie dem Fahrer eine Benachrichtigung gibt, bis die vorbestimmte Zeitspanne verstrichen ist, wenn der Hauptschalter (40) während der Ausführung der Stehhilfe ausgeschaltet wird.

4. Ein Neigefahrzeug (1) gemäß einem der Ansprüche 1 bis 3, wobei die vorbestimmte Zeitdauer 0,3 bis 1 Sekunde beträgt.

5. Ein Neigefahrzeug (1) gemäß einem der Ansprüche 1 bis 4, aufweisend:
eine Lenkwelle (14), die von dem Steuerrohr (11) getragen wird; und
einen Lenkgriff (15), der an der Lenkwelle (14) befestigt ist,
wobei das linke Rad (3L) und das rechte Rad (3R) ein linkes Vorderrad bzw. ein rechtes Vorderrad sind, die vor dem Lenkgriff (15) angeordnet sind.

6. Ein Neigefahrzeug (1) gemäß einem der Ansprüche 1 bis 5, aufweisend:
einen Sitz (5), der von dem Fahrzeugkarosserierahmen (10) getragen wird; und
eine Fußstütze (7), die von dem Fahrzeugkarosserierahmen (10) getragen wird, unterhalb des Sitzes (5) angeordnet ist und die Füße des auf dem Sitz (5) sitzenden Fahrers stützt.

## Revendications

1. Véhicule inclinable (1) comprenant :
un cadre de véhicule (10) incluant un tube de tête (11) ;
une roue gauche (3L) agencée à gauche par rapport au tube de tête (11) ;
une roue droite (3R) agencée à droite par rapport au tube de tête (11) ;
un élément de support de roue gauche (19L) configuré pour supporter la roue gauche (3L) ;
un élément de support de roue droite (19R) agencé à droite de l'élément de support de roue gauche (19L) et configuré pour supporter la roue droite (3R) ;
un élément de liaison (21) s'étendant à gauche et à droite du cadre de véhicule (10) ;
un axe de liaison central (21Cc) s'étendant en direction avant-arrière du véhicule, qui relie de manière rotative le cadre de véhicule (10) à l'élément de liaison (21) ;
un axe de liaison gauche (21Lc) s'étendant dans la direction avant-arrière du véhicule, qui relie de manière rotative l'élément de support de roue gauche (19L) à l'élément de liaison (21) ;
un axe de liaison droit (21Rc) s'étendant en direction avant-arrière du véhicule, qui relie de manière rotative l'élément de support de roue droite (19R) à l'élément de liaison (21) ;
un actionneur (33) configuré pour appliquer au cadre de véhicule (10) un couple autour de l'axe de liaison central (21Cc) ;
un dispositif de contrôle (36) configuré pour contrôler l'actionneur (33) ; et
un interrupteur principal (40) actionné par un conducteur,
dans lequel le dispositif de contrôle (36) inclut :
une section de contrôle d'assistance à la station debout (37) configurée pour exécuter une assistance à la station debout afin de maintenir le cadre de véhicule (10) debout par lui-même en contrôlant l'actionneur (33) ;
**caractérisé en ce que** le véhicule inclinable comprend une section de continuation d'assistance à la station debout (38) qui est configurée pour continuer le contrôle de l'actionneur (33) jusqu'à ce qu'une durée prédéterminée se soit écoulée quand l'interrupteur principal (40) est mis sur ARRÊT durant l'exécution de l'assistance à la station debout, et qui est configurée pour mettre fin au contrôle de l'actionneur (33) quand la durée prédéterminée s'est écoulée.

2. Véhicule inclinable (1) selon la revendication 1, dans lequel la section de continuation d'assistance à la station debout (38) est configurée pour diminuer graduellement le couple de sortie de l'actionneur (33) jusqu'à ce que la durée prédéterminée se soit écoulée quand l'interrupteur principal (40) est mis sur ARRÊT durant l'exécution de l'assistance à la station debout.

3. Véhicule inclinable (1) selon la revendication 1 ou **2,** comprenant un dispositif de notification (49) qui est configuré pour donner une notification au conducteur jusqu'à ce que la durée prédéterminée se soit écoulée quand l'interrupteur principal (40) est mis sur ARRÊT durant l'exécution de l'assistance à la station debout.

4. Véhicule inclinable (1) selon l'une quelconque des revendications 1 à 3, dans lequel la durée prédéterminée est de 0,3 à 1 seconde.

5. Véhicule inclinable (1) selon l'une quelconque des revendications 1 à 4, comprenant :
un arbre de direction (14) supporté par le tube de tête (11) ; et
un guidon (15) fixé à l'arbre de direction (14),
dans lequel la roue gauche (3L) et la roue droite (3R) sont respectivement une roue avant gauche et une roue avant droite, agencées en avant du guidon (15).

6. Véhicule inclinable (1) selon l'une quelconque des revendications 1 à 5, comprenant :
un siège (5) supporté par le cadre de véhicule (10) ; et
un repose-pied (7) supporté par le cadre de véhicule (10), agencé au-dessous du siège (5) et supportant les pieds du conducteur assis sur le siège (5).
